# EUROPÄISCHE PATENTSCHRIFT

(11) **EP 0 979 990 B1**
(45) Veröffentlichungstag und Bekanntmachung des Hinweises auf die Patenterteilung: **22.05.2002**
(21) Anmeldenummer: 99115716.5
(22) Anmeldetag: 10.08.1999
(51) Int. Cl.: G01L 5/16, G06F 3/00, G01L 5/22, G06K 11/18

(54) **Anordnung zum Auslösen von technischen Steueroperationen und/oder zum Auslösen der Ausführung von technischen Funktionen**
Device for starting technical controlling operations and/or for starting the execution of technical functions
Dispositif pour déclenchement d'operations techniques de contrôle et/ou de déclenchement d'execution des fonctions techniques

(30) Priorität: 10.08.1998 DE 19836047; 21.10.1998 DE 19852573
(43) Veröffentlichungstag der Anmeldung: 16.02.2000
(73) Patentinhaber: Deutsches Zentrum für Luft- und Raumfahrt e.V., 53175 Bonn (DE)
(72) Erfinder: Dietrich, Johannes, 82205 Gilching (DE); Gombert, Bernd, 82284 Grafrath (DE); Senft, Volker, 82229 Seefeld/Hechendorf (DE)
(74) Vertreter: von Kirschbaum, Albrecht, Dipl.-Ing.

(56) Entgegenhaltungen:
- EP-A- 0 240 023
- EP-A- 0 322 824
- WO-A-97/04369
- US-A- 5 452 615
- US-A- 5 598 187

## Beschreibung

Die Erfindung betrifft eine Anordnung zum Auslösen von technischen Steueroperationen und/oder zum Auslösen der Ausführung von technischen Funktionen mit einem von Hand betätigbaren Eingabegerät mit Kraft-Momenten-Sensor.

Ferner betrifft die Erfindung die Verwendung der Anordnung.

Derartige Kraft-Momenten-Sensoren sind beispielsweise aus DE 36 11 336 C2 oder DE 37 64 287 bzw. EP 0 240 023 B1 bekannt. Mit Hilfe eines solchen in einem Eingabegerät untergebrachten Kraft-Momenten-Sensors können Linearverschiebungen oder Drehauslenkungen erfaßt und direkt in translatorische und rotatorische Bewegungen bzw. Geschwindigkeiten eines zu steuernden Objekts umgesetzt werden. So können beispielsweise Automaten, Roboter, Manipulatoren oder ähnliche Systeme sowie auch 3D-Computergraphiken gesteuert werden.

In US 5,757,360 sind ein Verfahren und ein Eingabegerät zur mehrdimensionalen Eingabe beschrieben, was auf dem Erkennen von Bewegungen und Beschleunigungen beruht. Dabei wird ein spezifischer analoger Bewegungsablauf in Form eines Bewegungsmusters identifiziert, woraus Bewegungsbefehle abgeleitet und an eine animierte Graphikdarstellung gegeben werden. Die Bewegungsmuster werden mittels eines Mustererkennungsalgorithmus erkannt. Zusätzlich werden auch generelle Steuerbefehle erzeugt.

Ferner ist aus US 5,666,473 ein mehrdimensionaler Positionssensor bekannt, an dessen Oberfläche eine Vielzahl von Drucksensoren vorgesehen sind.

Eine im Dokument US-A-5,598,187 beschriebene Maus dient im Vergleich mit einer üblichen Maus, die eine ebene Auflagefläche erfordert, einer 1m freien Raum von Hand ausgeführten Steuerung eines Bewegungscursors auf einem Computer Bildschirm, wobei zwar bestimmte vorgegebene Bewegungsmuster zur Steuerung des Cursors erkannt werden müssen und dazu Beschleunigungssensoren und Drehratensensoren vorhanden sind. Diese Sensoren werden allerdings in keiner Weise zum Auslösen von Schaltvorgängen herangezogen. Vielmehr sind bei der im freien Raum arbeitenden Maus eigene Klickschalter vorgesehen, um z.B. Dateneingabevorgänge auszulösen.

Aufgabe der Erfindung ist es, mittels eines Eingabegeräts mit Kraft-Momenten-Sensor spezielle technische Steueroperationen und/oder eine Ausführung von technischen Funktionen sicher und gezielt auszulösen, ohne daß beispielsweise auf gespeicherte Druckmuster zurückgegriffen werden muß.

Gemäß der Erfindung ist die Aufgabe durch eine Anordnung mit den Merkmalen des Anspruchs 1 gelöst. Vorteilhafte Weiterbildungen der erfindungsgemäßen Anordnung sind Gegenstand der Ansprüche 2 bis 6.

Ferner sind in den Ansprüchen 7 bis 11 die Verwendung der Anordnung zum Steuern unterschiedlicher Objekte angegeben.

Bei der erfindungsgemäßen Lösung wird auf eine Bedienfläche des Eingabegeräts ein Druck ausgeübt und dadurch ein Impuls erzeugt, welcher mit Hilfe eines Kraft-Momenten-Sensors erfaßt und in ein aus einem Kraft- und einem Momenten-Vektor gebildetes Vektorpaar umgesetzt wird. Dieses Vektorpaar wird anschließend dahingehend überprüft, ob bestimmte charakteristische Impulsvorgaben erfüllt sind oder nicht. Sobald die Impulsvorgaben als erfüllt erkannt sind, wird zumindest eine mittels des Eingabegeräts auszuführende und einem bestimmten zu steuernden Objekt zugeordnete, technische Steueroperation und/oder auch mindestens eine mittels des Eingabegeräts auszuführende technische Funktion durch Schalten in einen Aktivierungszustand ausgelöst.

Ferner wird gemäß einer vorteilhaften Weiterbildung der Impuls aufgrund bestimmter charakteristischer Impulsvorgaben als Druckimpuls erkannt, so daß dann mindestens eine einem bestimmten Objekt zugeordnete mittels des Eingabegeräts auszuführende Steueroperation und/oder mindestens eine technische Funktion durch Schalten in den Aktivierungszustand ausgelöst werden kann. Gemäß einer weiteren bevorzugten Weiterbildung der Erfindung wird der Impuls durch Druck in einem begrenzten Bereich auf der Bedienoberfläche des Eingabegeräts erzeugt, wobei die Bedienoberfläche auch mehrere derartige Druckbereiche aufweisen kann.

Vorzugsweise kann gemäß der Erfindung der Impuls auf der Bedienoberfläche auch so erzeugt werden, daß er in Richtung auf ein in dem Kraft-Momenten-Sensor vorgesehenes Meßzentrum ausgerichtet ist. Darüber hinaus kann gemäß der Erfindung der Kraft- und der Momenten-Vektor, um zu erkennen, ob die bestimmten charakteristischen Impulsvorgaben einwandfrei erfüllt sind, über einen vorgegebenen Zeitabschnitt ausgewertet werden. Ferner kann auch der zeitliche Verlauf des Kraft- und Momenten-Vektors im Hinblick auf die Erfüllung der Impulsvorgaben ausgewertet werden.

Hierbei ist durch die Genauigkeit eines Kraft-Momenten-Sensors sowie gegebenenfalls auch durch die Größe der Bedienoberfläche eine maximal mögliche Anzahl von Druckbereichen auf der Bedienoberfläche und dadurch auch die entsprechende Anzahl von durch Schalten erzielbaren Aktivierungszuständen begrenzt.

Gemäß der Erfindung weist bei einer bevorzugten Anordnung das Eingabegerät mit Kraft-Momenten-Sensor eine Bedienoberfläche auf, auf welcher mindestens ein einem ganz bestimmten Objekt zugeordneter Bereich zum Eingeben eines Druckimpulses festgelegt ist. Ferner ist in dem Eingabegerät eine Einrichtung zur Auswertung und Erkennung eines mittels des Kraft-Momenten-Sensors erfaßten und in ein entsprechendes Kraft- und Momenten-Vektorpaar umgesetzten Impulses vorgesehen. Die Einrichtung zum Auswerten und Erkennen eines in ein Vektorpaar umgesetzten Impulses kann auch außerhalb des Eingabegeräts untergebracht und mit diesem verbunden sein.

Um den auf einer Bedienoberfläche festgelegten Bereich zum Eingeben eines Druckbereichs bequem erkennen zu können bzw. um mehrere auf einer Bedienoberfläche festgelegte Druckbereiche erkennen und voneinander unterscheiden zu können, können der oder die Druckbereiche speziell ausgestaltet und kenntlich gemacht und/oder auch mit entsprechend ausgeführten, gegebenenfalls plastisch gestalteten oder farbig ausgelegten Hinweissymbolen versehen sein.

Gemäß der Erfindung ist ein Eingabegerät mit Kraft-Momenten-Sensor sowohl als Schalter verwendbar als auch gleichzeitig zum Ausführen von technischen Steueroperationen und/oder Funktionen einsetzbar. Vorzugsweise eignet sich als Eingabegerät mit Kraft-Momenten-Sensor eine in DE 37 64 287 beschriebene opto-elektronische Anordnung, mit welcher gleichzeitig sechs Komponenten in bzw. um die Drehachsen eines kartesischen Koordinatensystems eingegeben werden können.

Mit Hilfe der Anordnung können Objekte wie Navigationssysteme, insbesondere solche gesteuert werden, die mit durch GPS-Empfang erhaltenen Daten betrieben werden. Dadurch kann in vorteilhafter Weise eine intuitive, räumliche Steuerung in den drei translatorischen und den drei rotatorischen Richtungen, beispielsweise auf das Navigieren auf Landkarten übertragen werdne.

Ferner kommen als Objekte auch reale und/oder virtuelle Multimediasysteme, wie beispielsweise ein Videorecorder mit integrierter Schnittstelle in Frage, bei denen das Eingabegerät mit Kraft-Momenten-Sensor als Schalter und anschließend zum Ausführen von technischen Steueroperationen und/oder Funktionen eingesetzt werden kann.

Ebenso kann die Anordnung auch zum Steuern eines realen oder virtuellen Misch- bzw. Steuerpultes verwendet werden, so beispielsweise zum Steuern des Entwickelns von neuartigen Farb-, Licht- und Tonkompositionen. Hierbei kann wiederum in vorteilhafter Weise die intuitive räumliche Steuerung in den drei translatorischen sowie in den drei rotatorischen Richtungen auf ein stufenloses räumliches Mischen oder Steuern einer großen Anzahl von Parametern (3D-Curser) übertragen werden.

Ebenso ist die Anordnung auch zum Steuern eines Informationszentrums verwendbar, von welchem aus beispielsweise über einen Monitor oder ein Telefon ein Navigationssystem, räumliche 3D-Wetterkarten, Rundfunk- oder Fernsehgeräte, das Internet, ein Monitor-Cursor, u.ä., gesteuert oder auch Personenkenndaten übermittelt werden können. Hierbei ist wiederum die intuitive räumliche Steuerung in den drei translatorischen und den drei rotatorischen Richtungen hinsichtlich des Positionierens und auch Navigierens von Menu-Feldern möglich.

Bei allen vorstehend angeführten Anwendungsmöglichkeiten können darüber hinaus auch ergänzende Befehls- und Menu-Funktionen direkt über die Bedienelemente angewählt und selektiert werden. Auf diese Weise können komplizierte Verschachtelungsebenen vermieden werden, bei welchen sonst ein Vielfaches an Schaltern und Bedienungselementen, beispielsweise Potentiometer, u.ä. verwendet werden müssen.

Somit können gemäß der Erfindung mit einem Eingabegerät mit Kraft-Momenten-Sensor nicht nur analog bis zu sechs Komponenten, nämlich die drei translatorischen und die drei rotatorischen Komponenten gesteuert werden, sondern gleichzeitig ist ein solches Eingabegerät gemäß der Erfindung auch als digital arbeitender Schalter einsetzbar, um durch Schalten in Aktivierungszustände einem oder mehreren Objekten zugeordnete, technische Steueroperationen und/oder gegebenenfalls anschließend durchzuführende technische Funktionen auszulösen.

In besonders vorteilhafter Weise kann somit die Anordnung als eine Art multifunktionaler Schalter eingesetzt werden, wobei Schaltoperationen als solche erkannt und dadurch ausgelöst unmittelbar anschließend technische Steueroperationen und/oder technische Funktionen durchgeführt werden.

Gemäß der Erfindung können beispielsweise auf einer Bedienoberfläche eines Eingabegeräts mit Kraft-Momenten-Sensor vier räumlich voneinander getrennte Druckbereiche festgelegt sein, die beispielsweise vier unterschiedlichen Objekten zugeordnet sind. An jedem dieser Objekte können jeweils bis zu sechs unterschiedliche Steueroperationen und/oder technische Funktionen nach einem Schalten des jeweiligen Objekts in den Aktivierungszustand ausgelöst und anschließend durchgeführt werden. Oder anders ausgedrückt, mit einem gemäß der Erfindung ausgelegten Eingabegerät mit Kraft-Momenten-Sensor können bei dem vorstehend angeführten Beispiel an vier verschiedenen Objekten insgesamt 24 verschiedene technische Steueroperationen und/oder Funktionen durchgeführt werden.

Gemäß der Erfindung ist somit auf der Basis eines Eingabegeräts mit Kraft-Momenten-Sensor eine Art multifunktionaler Schalter geschaffen, der ohne irgendwelche Kontakte, d.h. kontaktlos und damit vollkommen verschleißfrei arbeitet und somit auch eine extrem hohe Lebensdauer hat. Obendrein können bei einem derartigen Eingabegerät mit Kraft-Momenten-Sensor irgendwelche auftretende Störungen, wie beispielsweise Schockeinwirkungen oder Vibrationen, ohne weiteres gemessen und anschließend ausgefiltert werden.

Nachfolgend wird die Erfindung anhand einer bevorzugten Anordnung beschrieben. Es zeigen:
- Fig.1: eine schematische Darstellung eines Eingabegeräts mit teilweise aufgeschnittener Bedienkappe;
- Fig.2: eine in dem Eingabegerät der Fig.1 untergebrachte opto-elektronische Anordnung;
- Fig.3: eine der Fig.1 entsprechende Darstellung eines Eingabegeräts mit einer diesem zugeordneten Hand sowie mit darüber schematisch angedeuteten Kraftund Momenten-Vektoren;
- Fig.4a: eine prinzipielle Darstellung des Verlaufs eines Kraftvektors;
- Fig.4b: eine prinzipielle Darstellung eines in die x-y-Ebene projizierten Berührbereichs, und
- Fig.5: eine schematische Darstellung eines Informationszentrums mit einer es bedienenden Person.

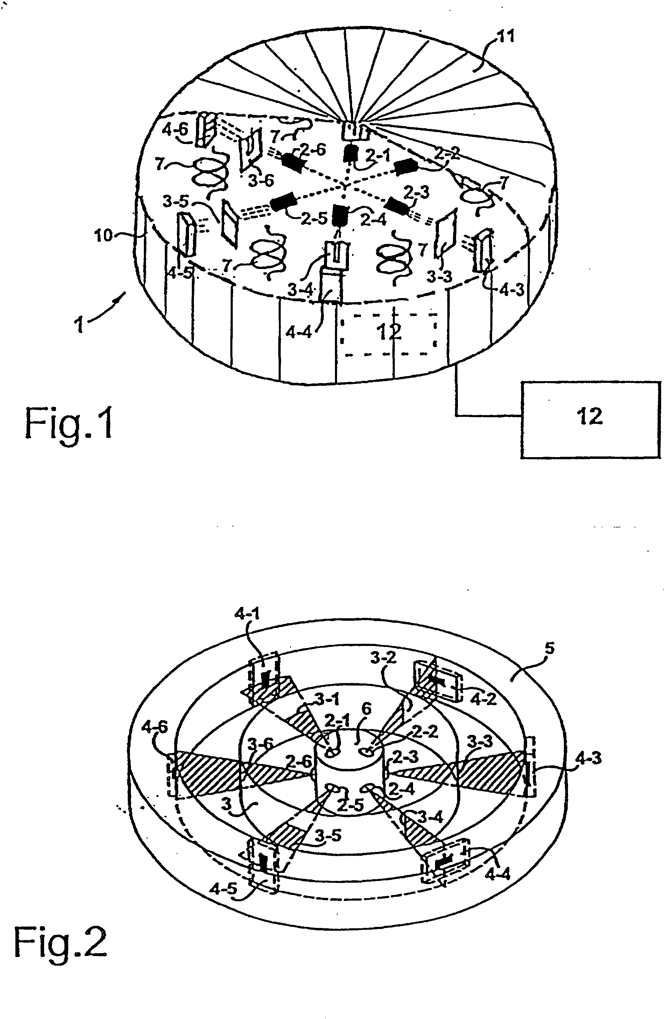

In Fig.1 ist eine Anordnung dargestellt, welche ein Eingabegerät 1 mit Kraft-Momenten-Sensor in Form einer in Fig.2 schematisch dargestellten opto-elektronischen Anordnung aufweist. Ferner ist entweder in dem Eingabegerät eine in Fig.1 gestrichelt angedeutete Einrichtung 12 zum Auswerten und Erkennen eines mittels des Kraft-Momenten-Sensors erfaßten und in ein Kraft- und Momenten-Vektorpaar umgesetzten Impulses vorgesehen, oder eine in Aufbau und Funktion identische, ausgezogen angedeutete Auswerteund Erkennungseinrichtung 12' kann auch mit dem Eingabegerät 1 verbunden sein.

In Fig.1 weist das Eingabegerät eine in der dargestellten Ausführungsform kreiszylinderförmige Bedienkappe 10 mit einer vorzugsweise leicht gewölbten Bedienoberfläche 11 auf, die in Fig.1 aufgeschnitten ist, so daß ein Teil des schematisch dargestellten Aufbaus eines schematisch angedeuteten Kraft-Momenten-Sensor in Form der opto-elektronischen Anordnung zu erkennen ist.

In der in Fig.2 schematisch wiedergegebenen opto-elektronischen Anordnung sind sechs lichtemittierende Einrichtungen, vorzugsweise in Form von sechs lichtemitierenden Dioden 2-1 bis 2-6 in einer Ebene angeordnet. Den lichtemittierenden Einrichtungen ist in einem festen Abstand jeweils eine Schlitzblende 3-1 bis 3-6 zugeordnet. Hierbei sind benachbarte Schlitzblenden in einem zylindrischen Ring 3 jeweils um 90° gegeneinander versetzt ausgebildet, so daß beispielsweise die Schlitzblende 3-1 waagrecht ausgerichtet und die beiden benachbarten Schlitzblenden 3-2 bzw. 3-6 senkrecht dazu ausgerichtet sind.

In Fig.2 sind sechs photoempfindliche Detektoren 4-1 bis 4-6 in einem zylindrischen Ring 5 bezüglich der ihnen zugeordneten Schlitzenblenden 3-1 bis 3-6 entsprechend ausgerichtet. Ferner ist der Ring 5 mit den sechs Detektoren 4-1 bis 4-6 fest an der Innenseite der vorzugsweise zylinderförmigen Bedienkappe 10 des Eingabegeräts 1 angebracht. Da die sechs lichtemittierenden Dioden 2-1 bis 2-6 in Fig.2 in einer schematisch als Zylinder angedeuteten Halterungseinrichtung 6 untergebracht sind, welche ihrerseits in dem Eingabegerät 1 stationär angeordnet ist, ist über die Bedienkappe 10 der mit dieser fest verbundene Ring 5 mit den sechs Detektoren gegenüber der stationären Anordnung der sechs Dioden 2-1 bis 2-6 und des ihnen fest zugeordneten Schlitzblendenrings 3 bewegbar.

Die stationäre, in Fig.2 schematisch als Zylinder angedeutete Halterungseinrichtung 6 kann bei einer praktischen Ausführungsform beispielsweise auch als eine stationäre Scheibe ausgeführt sein, deren Durchmesser etwa dem Außendurchmesser des die Detektoren 4 tragenden Rings 5 entspricht, und welche über oder unter dem Ring 5 angeordnet sein kann.

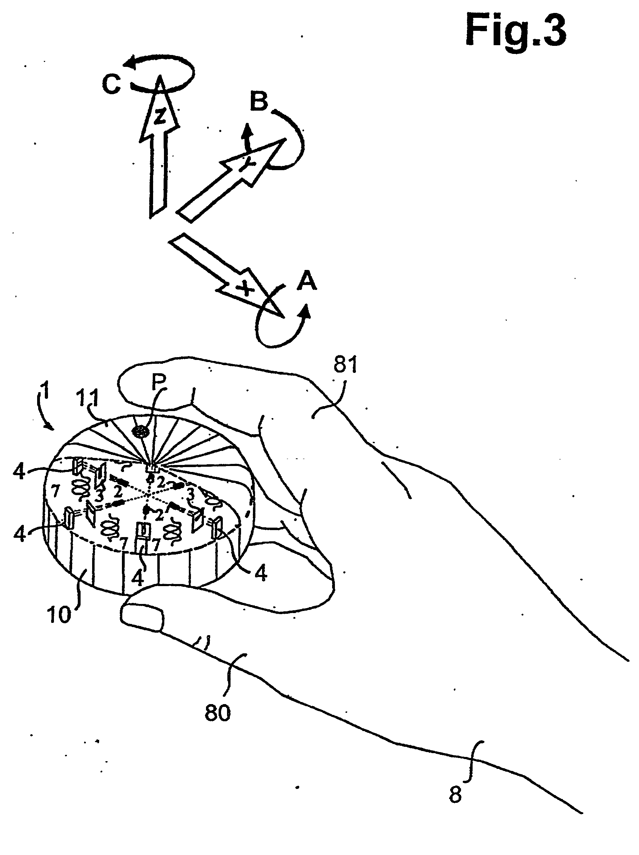

Zwischen dem Ring 5 und einer solchen scheibenförmigen Halterungseinrichtung sind Federlemente 7 (siehe Fig.1), vorzugsweise in Form von Schraubenfedern vorgesehen, welche mittels nicht näher dargestellten Schraubbolzen sowohl dem Ring 5 als auch der scheibenförmigen Halterungseinrichtung fest zugeordnet sind. Durch die Schraubenfedern 7 ist erreicht, daß der die Detektoren 4 tragende Ring 5 über die Bedienkappe 10 bezüglich der stationären Anordnung der lichtemittierenden Dioden 2 und dem diesen fest zugeordneten Schlitzblendenring 3 in Richtung der drei Achsen X, Y, Z eines Koordinatensystsems (siehe Fig.3) und um diese drei Achsen bewegbar ist und nach jeder Verschiebung oder Winkeldrehung jeweils wieder in seine Ausgangslage zurückkehrt.

Die mindestens sechs Detektoren 4-1 bis 4-6 sind in gleichen Winkelabständen voneinander, d.h. unter einem Winkel von 60°, in einer Ebene angeordnet, und weisen die abwechselnd zu dieser Ebene horizontal und vertikal ausgerichteten Schlitzblenden 3-1 bis 3-6 auf. Wie aus der Lage der einzelnen Schlitzblenden und der durch Schraffur hervorgehobenen und von den einzelnen Dioden 2-1 bis 2-6 ausgehenden Ebenen zu ersehen ist, sind die Achsen der einzelnen positionsempfindlichen Detektoren 4-1 bis 4-6 immer senkrecht zu den ihnen zugeordneten Schlitzblenden 3-1 bis 3-6 ausgerichtet.

Mit der opto-elektronischen Anordnung ist eine vollständige Erfassung aller sechs möglichen Bewegungskomponenten, nämlich der drei translatorischen Bewegungen in Richtung der drei Achsen X, Y und Z (siehe Fig.3) eines Koordinatensystems und der drei rotatorischen Bewegungen A, B und C um diese drei Achse X, Y und Z erreicht. Da die Bedienkappe 10 fest an dem die Dektoren 4 tragenden Ring 5 angebracht ist, und der Ring mittels der Federelemente 7 (Fig.1) federnd mit der stationären Halterungseinrichtung verbunden ist, welche die sechs Dioden 2 und die diesen zugeordneten Schlitzblenden 3-1 bis 3-6 trägt, halten die Federelemente 7 das gesamte Meßsystem in der mechanischen Nullstellung, wenn keine Kommandos auf die Bedienkappe 10 aufgebracht werden.

Hierbei läßt sich durch Variation der Federeigenschaften (insbesondere deren Steifigkeit) die Betriebscharakteristik der Bedienkappe in weiten Grenzen beeinflussen. Bei Verwendung von verhältnismäßig weichen Federelementen wirkt das Eingabegerät 1 eher als ein wegempfindlicher Sensor, während bei Verwenden von härteren Federelementen 7 Kommandos mehr durch Ausüben von Kräften und Momenten erteilt werden.

Ferner ist bei der opto-elektronischen Anordnung jedem positionsempfindlichen Detektor je eine eigene Lichtquelle zugeordnet, welche durch eine einfache Regelelektronik angesteuert wird. Mit Hilfe dieser Regelelektronik werden dann beispielsweise unterschiedliche Detektor-Empfindlichkeiten, unterschiedliche Leuchtdioden-Wirkungsgrade, Toleranzen in den elektronischen Bauelementen sowie Temperaturdriften automatisch und schnell ausgeregelt. Auf diese Weise ist auch kein zusätzlicher Abgleich erforderlich.

In Fig.3 ist dem Eingabegerät 1, welches demjenigen der Fig.1 entspricht, eine Hand 8 in der Weise zugeordnet, daß deren Zeigefinger 81 in einer Position über einem Berührpunkt P gehalten ist, während der Daumen 80 und die übrigen Finger das Eingabegerät 1 umgreifen. In Fig.3 sind über der das Eingabegerät 1 umgreifenden Hand 8 durch Pfeile angedeutete Kraftvektoren wiedergegeben, die in Richtung der drei Koordinatenachsen X, Y und Z verlaufen, während durch mit Pfeilspitzen versehene Teilkreise die um die jeweiligen Achsen erzeugbaren Momenten-Vektoren A, B und C angedeutet sind.

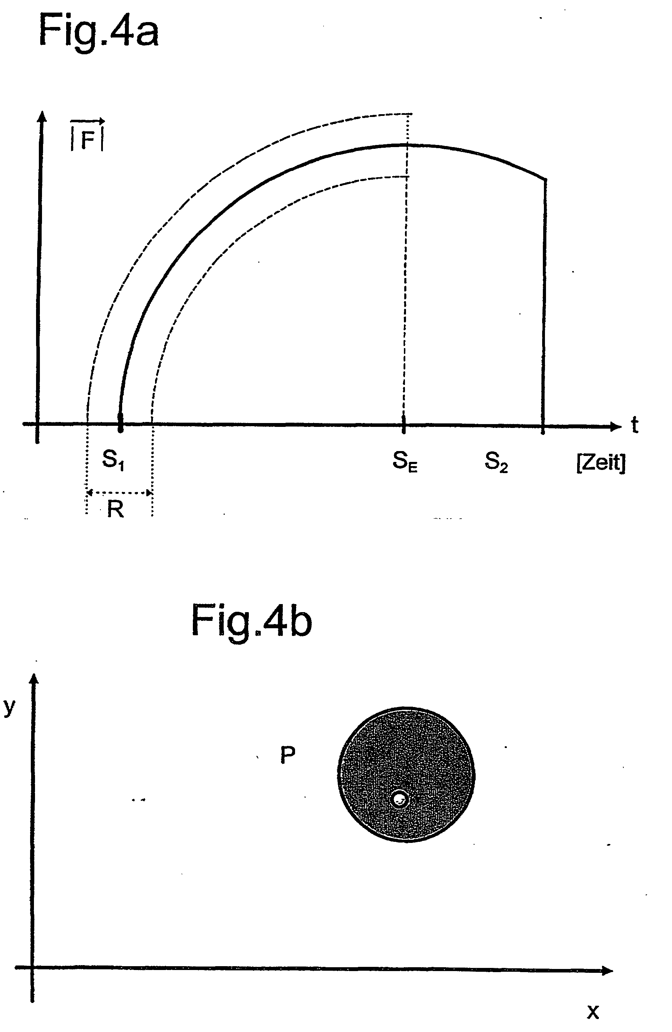

In Fig.4a ist ein Verlauf während des Schaltens in einen Aktivierungszustand dargestellt, was nachstehend als "Schaltoperation" bezeichnet wird, durch welche mindestens eine mittels des Eingabegeräts 1 auszuführende, technische Steueroperation ausgelöst wird. Hierbei ist auf der Abszisse die Zeit t und auf der Ordinate der Absolutwert einer Kraft |F | aufgetragen. In Fig.4a ist mit S₁ der Beginn einer solchen "Schaltoperation" und mit S₂ das Ende dieser "Schaltoperation" angezeigt. Mit S_{E} ist der Zeitpunkt bezeichnet, an welchem ein erzeugter Druckimpuls als Schaltoperation von dem Eingabegerät 1 erkannt und als solche ausgewertet worden ist. In dem Zeitabschnitt zwischen dem Beginn S₁ der Schaltoperation und dem Zeitpunkt S_{E}, an welchem die Schaltoperation als solche erkannt wird, kann beispielsweise viermal ein Kraftund Momenten-Vektorpaar gebildet werden, das durch einen beispielsweise auf einen Berührpunkt P in Fig.4b ausgeübten Druck und einen dadurch erzeugten Druckimpuls hervorgerufen worden ist.

Wenn von der in oder bei dem Eingabegerät 1 vorgesehenen Einrichtung 12 bzw. 12' zum Erkennen und Auswerten eines solchen in ein Kraft- und Momenten-Vektorpaar umgesetzten Impulses festgestellt worden ist, daß die Werte der vier gemessenen und erfaßten Vektorpaare in einem vorgegebenen, verhältnismäßig engen Toleranzbereich liegen, wird zum Zeitpunkt S_{E} der auf die Bedienoberfläche 11 ausgeübte Druck und der dadurch erzeugte Druckimpuls als eine Schaltoperation" erkannt, so daß danach die dieser "Schaltoperation" zugeordnete und mit dem Eingabegerät 1 auszuführende Steueroperation ausgelöst wird. Hierbei ist in Fig.4a der Toleranzbereich durch parallel zu der ausgezogenen kreisbogenförmigen Linie in einem Abstand R voneinander verlaufende strichlierte Linien sowie durch einen grau ausgelegten, den Berührpunkt P umgebenden Kreis in Fig.4b angedeutet.

Dies ist ein Beispiel für eine der Möglichkeiten, wie ein Kraft- und Momenten-Vektorpaar über einen vorgegebenen Zeitabschnitt ausgewertet werden kann, um letztendlich zu erkennen, daß besitmmte vorgegebene charakteristische Impulsvorgaben erfüllt sind. Somit ist nicht die Position bzw. das Berühren eines Berührpunkts P das Kriterium, daß eine Schaltoperation" und keine Steueroperation getätigt worden ist, sondern die Verknüpfung des in dem Berührpunkt ausgeübten Drucks und des dadurch mittels des Eingabegeräts erzeugten Kraft-Momenten-Vektorpaars, das beispielsweise über einen vorgegebenen Zeitabschnitt ausgewertet worden ist, ist das Kriterium, daß eine "Schaltoperation" durchgeführt worden ist, und dadurch die einem bestimmten Objekt zugeordnete Steuerfunktion ausgelöst worden ist.

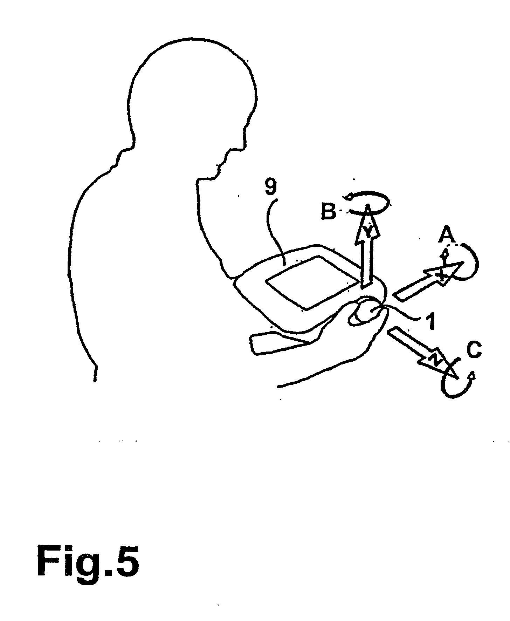

In Fig.5 ist durch Umrißlinien im Profil eine Person dargestellt, vor welcher ein nicht näher bezeichnetes Energiezentrum angeordnet ist, über welchem ein Touch-Screen 9 vorgesehen ist. Ferner ist in Fig.5 an der rechten Seite des dem Informationszentrum zugeordneten Touch-Screen 9 eine Anordnung aus einem Eingabegerät 1 und dem in diesem untergebrachten Kraft-Momenten-Sensor angebracht.

Obwohl es in Fig.5 nicht dargestellt ist, kann beispielsweise auch noch eine in Aufbau und Funktion identische Anordnung mit einem Eingabegerät und Kraft-Momenten-Sensor, beispielsweise an der linken Seite des Touch-Screen vorgesehen sein. Ferner sind analog zu Fig.3 mit den Bezeichnungen der drei Koordinatenachsen X, Y, Z gekennzeichnete Kraftvektoren und um diese durch mit einer Pfeilspitze versehenen Teilkreise angedeutete Momenten-Vektoren A, B und C eingetragen.

### Bezugszeichenliste

- 1: Eingabegerät
- 10: kreiszylinderförmige Bedienkappe
- 11: (leicht) gewölbte Bedienoberfläche
- 2-1 bis 2-6: lichtemittierende Dioden
- 3: Schlitzblendenring
- 3-1 bis 3-6: Schlitzblenden
- 4-1 bis 4-6: photoempfindliche Detektoren
- 5: Ring
- 6: Halterungseinrichtung
- 7: Federelemente
- 8: Hand
- 80: Daumen
- 81: Zeigefinger
- 9: Touch-Screen
- P: Berührpunkt

## Patentansprüche

1. Anordnung zum Kommandieren von technischen Steueroperationen und/oder von technischen Funktionen mit einem Eingabegerät (1), in dem ein über eine von Hand bewegbare Bedienoberfläche (11) des Eingabegeräts betätigter Kraft-Momenten-Sensor untergebracht ist, der Linearverschiebungen und/oder Drehauslenkungen der Bedienoberfläche erfaßt und diese in ein entsprechendes, aus einem Kraft- und einem Momenten-Vektorsignal bestehendes Kraft-Momenten-Vektorsignalpaar umsetzt, **dadurch gekennzeichnet, daß** auf der Bedienoberfläche (11) des Eingabegeräts (1) mindestens ein festgelegter, einem bestimmten Objekt zugeordneter Druckimpulseingabebereich (P) zum Eingeben eines der Auslösung einer besonderen Schaltoperation zugeordneten, einer impulsförmigen Linearverschiebung und/oder Drehauslenkung der Bedienoberfläche entsprechenden Druckimpulses vorgesehen ist und daß eine im Eingabegerät enthaltene oder mit diesem verbundene Einrichtung (12) zur Erkennung und Auswertung eines solchen Druckimpulses vorgesehen ist, die dazu das vom Kraft-Momenten-Sensor erfaßte Kraft-Momenten-Vektorsignalpaar im Hinblick auf die Lage innerhalb eines vorgegebenen Druckimpuls-Toleranzbereiches überprüft und bei Erfüllung dieser Toleranzvorgaben die besondere Schaltoperation auslöst.

2. Anordnung nach Anspruch 1, **dadurch gekennzeichnet, daß** die Einrichtung (12) zur Erkennung und Auswertung eines Druckimpulses so ausgebildet ist, daß der zeitliche Verlauf des Kraft-Momenten-Vektorsignalpaares über einen vorgegebenen Zeitabschnitt dahingehend ausgewertet wird, ob der zeitliche Verlauf des vorgegebenen Druckimpuls-Toleranzbereiches erfüllt ist.

3. Anordnung nach Anspruch 1 oder 2, **dadurch gekennzeichnet, daß** mindestens einer der auf der Bedienoberfläche (11) festgelegten Druckimpulseingabebereiche (P) als solcher kenntlich gemacht und/oder mit Hinweissymbolen versehen ist.

4. Anordnung nach einem der vorhergehenden Ansprüche, **dadurch gekennzeichnet, daß** das Eingabegerät (1) mit Kraft-Momenten-Sensor zugleich sowohl als Eingabegerät zum Ausführen von technischen Steueroperationen und/oder Funktionen eines Objekts als auch zum Auslösen von besonderen Schaltoperationen bei diesem oder einem anderen Objekt vorgesehen ist.

5. Anordnung nach einem der vorhergehenden Ansprüche, **dadurch gekennzeichnet, daß** der Kraft-Momenten-Sensor des Eingabegeräts (1) eine opto-elektronische Anordnung zum gleichzeitigen Eingeben von sechs Komponenten in Richtung der bzw. um die drei Achsen eines kartesischen Koordinatensystems ist, wobei jede von sechs in gleichen Winkelabständen voneinander in einer Ebene angebrachten lichtemittierenden Einrichtungen (2-1) bis (2-6) mit jeweils vorgeschalteter, fest angeordneter Schlitzblende (3-1 bis 3-6) gegenüber je einem mit seiner Detektorachse senkrecht zur Schlitzrichtung der jeweils zugeordneten Schlitzblende (3-1 bis 3-6) ausgerichteten, positionsempfindlichen Detektor (4-1 bis 4-6) so vorgesehen ist, daß die lichtemittierenden Einrichtungen (2-1 bis 2-6) mit zugeordneten Schlitzblenden (3-1 bis 3-6) und die positionsempfindlichen Detektoren (4-1 bis 4-6) relativ gegeneinander bewegbar sind, und die jedem positionsempfindlichen Detektor (4-1 bis 4-6) einzeln zugeordnete lichtemittierende Einrichtung (2-1 bis 2-6) jeweils mit einer Regelelektronik angesteuert wird.

6. Anordnung nach einem der vorhergehenden Ansprüche, **gekennzeichnet durch** eine vorzugsweise seitliche Anbringung an einem einem Informationszentrum zugeordneten Touch-Screen.

7. Verwendung einer Anordnung nach einem der Ansprüche 1 bis 5 zum Steuern eines Navigationssystems.

8. Verwendung einer Anordnung nach Anspruch 7 zum Steuern eines Navigationssystems, das mittels durch GPS-Empfang erhaltene Daten betrieben wird.

9. Verwendung einer Anordnung nach einem der Ansprüche 1 bis 5 zum Steuern eines realen und/oder virtuellen Multimediasystems.

10. Verwendung einer Anordnung nach einem der Ansprüche 1 bis 5 zum Steuern eines Videorecorders mit integrierter Schnittstelle.

11. Verwendung einer Anordnung nach einem der Ansprüche 1 bis 5 zum Steuern eines realen oder virtuellen Misch- oder Steuerpultes.

## Claims

1. An assembly for commanding technical operations and/or technical functions including an input device (1) in which a force/moment sensor actuated via a manually movable operator control surface (11) of the input device is accommodated for sensing linear displacements and/or rotatory excursions of the operator control surface and converting them into a corresponding force/moment vector signal pair comprising a force/moment vector signal, **characterized in that** provided on the operator control surface (11) of the input device (1) is at least one defined pressure pulse input site (P) assigned to a specific object for entering a pressure pulse corresponding to a pulse-shaped linear displacement or rotatory excursion of the operator control surface assigned to the activation of a special switching operation and that provided in the input device or connected thereto is a means (12) for identifying and analyzing one such pressure pulse by checking the force/moment vector signal pair sensed by the force/moment sensor as to it being within a predefined pressure pulse tolerance range and activating said special switching operation when said tolerance requirements are satisfied.

2. The assembly as set forth in claim 1, **characterized in that** the means (12) for identifying and analyzing a pressure pulse is configured so that the time profile of the force/moment vector signal pair is analyzed in a predefined time window as to whether the time profile of the predefined pressure pulse tolerance range is satisfied.

3. The assembly as set forth in claim 1 or 2, **characterized in that** at least one of the pressure pulse input sites (P) defined on the operator control surface (11) is rendered identified as such and/or is provided with indicating symbols.

4. The assembly as set forth in any of the preceding claims, **characterized in that** the force/moment sensor input device is provided both as an input device for implementing technical control operations and/or functions of an object and for activating specific switching operations with this or with some other object.

5. The assembly as set forth in any of the preceding claims, **characterized in that** the force/moment sensor of the input device (1) is an optoelectronic assembly for simultaneously entering six components in the direction of or about the three axes of a Cartesian system of coordinates, each of six light-emitting means (2-1 to 2-6) located equispaced angularly from each other in a single plane each with an input fixedly arranged slotted apertures (3-1 to 3-6) is provided opposite one position-sensing detector (4-1 to 4-6) each oriented to each assigned slotted aperture (3-1 to 3-6) so that the light-emitting means (2-1 to 2-6) with the assigned slotted apertures (3-1 to 3-6) and the position-sensing detectors (4-1 to 4-6) are movable each relative to the other and each of the light-emitting means (2-1 to 2-6) assigned to each position-sensing detectors (4-1 to 4-6) is signaled by an electronic closed loop controller.

6. The assembly as set forth in any of the preceding claims, **characterized by** a preferred side attachment to a touch screen assigned to an information center.

7. Use of an assembly as set forth in any of the claims 1 to 5 for controlling a navigation system.

8. Use of an assembly as set forth in claim 7 for controlling a navigation system which is operated by means of data received by GPS reception.

9. Use of an assembly as set forth in any of the claims 1 to 5 for controlling a real and/or virtual multimedia system.

10. Use of an assembly as set forth in in any of the claims 1 to 5 for controlling a video recorder with an integrated interface.

11. Use of an assembly as set forth in any of the claims 1 to 5 for controlling a real and/or virtual mixing or control desk.

## Revendications

1. Dispositif pour déclencher des opérations techniques de commande et/ou des fonctions techniques comportant un appareil d'entrée (1), dans lequel est logé un capteur de force/de couple, qui est actionné par l'intermédiaire d'une surface d'actionnement (11), déplaçable manuellement, de l'appareil d'entrée et qui détecte des déplacements linéaires et/ou des déviations angulaires de la surface d'actionnement et convertit ces déplacements ou déviations en une paire correspondante de signaux vectoriels de force/de couple, constituée par un signal vectoriel de force et un signal vectoriel de couple, **caractérisé en ce que** sur la surface d'actionnement (11) de l'appareil d'entrée (1) est prévue au moins une partie fixée (P) d'entrée d'impulsions de pression, associée à un objet déterminé, pour l'introduction d'une impulsion de pression qui est associée au déclenchement d'une opération de commutation particulière et correspond à un déplacement linéaire et/ou à une déviation de rotation, de forme impulsionnelle, de la surface d'actionnement et qu'il est prévu un dispositif (12), qui est contenu dans l'appareil d'entrée ou est relié à ce dernier, pour l'identification et l'évaluation d'une telle impulsion de pression, qui à cet effet contrôle la paire de signaux vectoriels de force/de couple détectés par le capteur de force/de couple en rapport avec la position à l'intérieur d'une plage prédéterminée de tolérance d'impulsions de pression et, lorsque ces prescriptions de tolérance sont satisfaites, déclenche l'opération de commutation particulière.

2. Dispositif selon la revendication 1, **caractérisé en ce que** le dispositif (12) servant à identifier et évaluer l'impulsion de pression est agencée de telle sorte que la variation dans le temps de la paire de signaux vectoriels de force/de couple est évaluée pendant un intervalle de temps prédéterminé pour savoir si la variation dans le temps de la plage prédéterminée de tolérance de l'impulsion de pression est satisfaite.

3. Dispositif selon la revendication 1 ou 2, **caractérisé en ce qu'**au moins l'une des plages (P) d'entrée d'impulsions de pression fixée sur la surface d'actionnement (1) est identifiée en tant que telle et/ou est pourvue de symboles indicateurs.

4. Dispositif selon la revendication précédentes, **caractérisé en ce que** l'appareil d'entrée (1) comportant un capteur de force/de couple est prévu simultanément aussi bien en tant qu'appareil d'entrée pour l'exécution d'opérations techniques de commande et/ou de fonctions d'un objet ainsi que pour le déclenchement d'opérations particulières de commutation dans le cas de cet objet ou d'un autre objet.

5. Dispositif selon l'une des revendications précédentes, **caractérisé en ce que** le capteur de force/de couple de l'appareil d'entrée (1) est un dispositif optoélectronique servant à introduire simultanément six composantes dans la direction des trois axes ou autour des trois axes d'un système de coordonnées cartésien, et dans lequel chacun de six dispositifs (2-1 à 2-6), qui émettent une lumière et sont disposés dans un plan en étant séparés par la même distance angulaire, comportant un diaphragme à fente (3-1 à 3-6) prévu respectivement en amont et monté de façon fixe est prévu en vis-à-vis d'un détecteur (4-1 à 4-6) sensible du point de vue de la position et dont l'axe est orienté perpendiculairement à la direction de la fente du diaphragme à fente respectif associé (3-1 à 3-6), de telle sorte que les dispositifs (2-1 à 2-6) émettant une lumière, équipés des diaphragmes à fente associés (3-1 à 3-6) et des détecteurs (4-1 à 4-6) sensibles à la position, peuvent être déplacés les uns par rapport aux autres, et que le dispositif (2-1 à 2-6), qui émet une lumière et est associé individuellement à chaque détecteur (4-1 à 4-6) sensible à la position, est commandé respectivement par un système électronique de régulation.

6. Dispositif selon l'une des revendications précédentes, **caractérisé par** un montage de préférence latéral sur un écran tactile associé à un centre d'information.

7. Utilisation d'un dispositif selon l'une des revendications 1 à 5, pour la commande d'un système de navigation.

8. Utilisation d'un dispositif selon la revendication 7 pour la commande d'un système de navigation, qui fonctionne au moyen de données reçues au moyen d'une réception GPS.

9. Utilisation d'un dispositif selon l'une des revendications 1 à 5, pour la commande d'un système multimédia réel et/ou virtuel.

10. Utilisation d'un dispositif selon l'une des revendications 1 à 5 pour la commande d'un enregistreur vidéo comportant une interface intégrée.

11. Utilisation d'un dispositif selon l'une des revendications 1 à 5 pour la commande d'un pupitre réel ou virtuel de mélange ou de commande.
